# EUROPEAN PATENT APPLICATION

(11) **EP 1 484 597 A1**
(43) Date of publication of application: **08.12.2004**
(21) Application number: 04013124.5
(22) Date of filing: 03.06.2004
(51) Int. Cl.: G01N 21/35, G01J 3/443

(54) **Detection and analysis of chemical or biological substances using passive emission spectroscopy**

(30) Priority: 06.06.2003 US 456098
(71) Applicant: Northrop Grumman Corporation, Los Angeles, CA 90067-2199 (US)
(72) Inventor: Chou, Mau-Song, Rancho Palos Verdes CA 90275 (US); Behrens, H. Wilhelm, Rancho Palos Verdes CA 90275 (US); Sullivan, Brian M., Manhattan Beach CA 90266 (US); Brock, John C., Redondo Beach CA 90278 (US)
(74) Representative: Schmidt, Steffen J., Dipl.-Ing.

(57) **Abstract**

A system (10) for detecting and analyzing chemical and biological constituents in a sample (12). The system (10) includes a spectrometer (18) for passively receiving emissions (22) from the sample (12) to detect the constituents therein. A cold device (28) is positioned within the field-of-view of the spectrometer (18) at an opposite side of the sample (12) from the spectrometer (18). The cold device (28) provides a low temperature background relative to the sample (12) so as to increase the emissions (22) from the sample (12) and also to reduce the background emission. The system may further comprise a sample chamber (14) for containing the sample. Alternatively, the system may comprise a transmission sample window onto which the sample is provided or the system may be arranged for remotely investigating a sample cloud in the free atmosphere.

## Description

### BACKGROUND OF THE INVENTION

### 1. Field of the Invention

This invention relates generally to a system and method for detecting constituents in a sample and, more particularly, to a system and method for detecting certain chemical or biological constituents in a sample, where the background in the field-of-view of a spectrometer in the system is cold or hot relative to the temperature of the sample.

### 2. Discussion of the Related Art

It is known in the art to detect certain constituents in a sample, such as a chemical cloud in the air, by spectral analysis of the molecules in the sample. This type of detection has many applications, including detecting natural gas leaks from underground pipes, chemical clouds from chemical spills, volatile organic vapor from chemical processes, pollution from smoke stacks, military chemical warfare agents, biological aerosols and bacteria, explosives or illegal drugs, and other chemical or biological materials of interest. Some of these applications require detection sensitivity in the sub-ppb (parts per billion) level.

Sometimes this type of spectral analysis of a sample is performed remotely, such as up to several km away, because the constituents in the sample may be toxic, and thus a threat to health, or it may not be possible to directly detect the sample. The distance the detecting instrument has to be from the sample for remote passive sensing depends on the particular application, and different systems exist for different applications.

To perform this type of detection and analysis, a spectrometer, such as a Fourier transform infrared (FTIR) spectrometer, is directed towards the sample containing the possible material of interest, so that it passively receives emissions therefrom. Generally, the spectrometer detects emissions in the infrared wavelengths, 5-25 µm. If the sample is warmer than the background, such as sky, mountains or other terrain, along the field-of-view of the spectrometer, target molecules in the sample will exhibit emissions having an energy greater than the background emissions. If the sample is colder than the background, target molecules in the sample will exhibit absorptions having an energy less than the background emissions. If the sample is the same temperature as the background, the target molecules within the sample are absorbing photons at the same rate that they are emitting photons, so there is no discernable net emission from the sample. As the thermal contrast between the sample and the background increases, more net emissions are available to be received by the spectrometer.

A spectral display generated by the spectrometer from the emissions provides emission bands at certain wavelengths that is indicative of the molecules in the sample. Because each material has its own spectral "fingerprint" representative of its molecules, the detected spectral display can be compared to a known spectral fingerprint of a particular chemical or biological material of interest to determine if that material exists in the sample, and if so, at what level.

A problem exists with the known passive remote sensing techniques that are currently being used in the art because the thermal contrast between the sample and the background is often very small. For example, the temperature of a suspected chemical or biological cloud is generally only about 2-3°C warmer than the temperature of the background. Because there is such a small temperature difference, the detectable emissions from the cloud are typically very weak. This results in a poor signal-to-noise ratio, and thus, poor detection sensitivity and possibly a high false alarm rate.

U.S. Patent 6,531,701, titled Remote Trace Gas Detection and Analysis, assigned to the Assignee of this application and herein incorporated by reference, addresses this problem. In the '701 patent, the system employs a radiation beam to radiate a sample, such as a chemical cloud, to increase its temperature relative to the background. The wavelength of the radiation beam is selected to be in resonance with a particular target molecule in the cloud, or in a resonance with water vapor or oxygen atoms commonly present in air. The resonance causes the target molecules, water vapor or oxygen molecules to rotate or vibrate, which causes their energy to increase. The radiation energy is thermalized due to collision energy transfer causing inter-molecular relaxation. These factors increase the temperature of the cloud relative to the surrounding background that causes the emission intensity of the molecules in the cloud to increase resulting in improved detection. The emissions are collected and analyzed by a spectrometer.

An absorption technique is commonly used in the art for the analysis of samples, such as vapor samples, liquid samples, solid samples, etc., in the laboratory. Radiation from a high-temperature source is transmitted through the sample, and the transmitted radiation is spectrally resolved by a spectrometer. The absorption by the sample as the difference between the transmitted radiation and the incident radiation is measured.

In an absorption technique, the sensitivity to detect certain constituents in the sample is limited by the systems ability to resolve the difference between the incident radiation and the transmitted radiation at the frequency fingerprint of the constituent. In other words, the detection sensitivity is determined by the systems ability to resolve a small absorption signal from a large incident radiation signal. Also, solid samples need to be ground into fine powders and mixed with a suitable index-matching liquid medium or potassium bromide powder. Further, the sample needs to be provided with a uniform thickness in a sample cell without voids across the sample. If voids are present, light that leaks through the sample can introduce errors in the measurement. Thus, extensive sample preparation is required in the known absorption methods.

An absorption technique is also known in the art to measure the effluence of a high performance liquid chromatograph (HPLC), a common analytical instrument for the analysis of a liquid sample. In many known systems, the detection sensitivity is marginal because the amount of the effluence from an HPLC is often very small.

Currently, there is no suitable technique for the spectral analysis of particulate aerosols, bio-aerosols or liquid aerosols *in situ* in the air. An infrared absorption method cannot be readily used because of the overwhelming interference from the light scattered by the aerosols.

### SUMMARY OF THE INVENTION

In accordance with the teachings of one embodiment of the present invention, a system for detecting and analyzing constituents in a sample is disclosed. The system includes a spectrometer for passively receiving emissions from the sample to detect the constituents therein. A telescope or other optical device can be used to define the field-of-view of the spectrometer. A cold device, such as a cold dewar or an electrically powered cooler, is positioned within the field-of-view of the spectrometer at an opposite side of the sample from the spectrometer. The cold device provides a low temperature background relative to the temperature of the sample so as to increase the thermal contrast, and thereby increasing the emissions from the sample. Furthermore, the background emission, as received by a spectrometer, is very low because of the presence of the cold device. Hence, the emission from the constituents in a sample can be precisely resolved by the spectrometer in the low or near absence of the background emission. Optical elements can be provided to focus the field-of-view of the spectrometer to a small area, so that a relatively small cold target is adequate for the application.

According to another embodiment of the present invention, another system for detecting and analyzing constituents in a sample is disclosed. The system includes a spectrometer and an electromagnetic radiation source. A telescope or other optical device can be employed to define the filed-of-view of the spectrometer. The electromagnetic radiation source can be a laser or a microwave source. The radiation source is used to irradiate a background target behind the sample along the field-of-view of the spectrometer. The irradiation heats the background target, thereby raising the temperature of the background target relative to the sample. The spectrometer is used to resolve the absorption spectrum as the emissions from the warmer background target passing through the sample.

Additional advantages and features of the present invention will become apparent from the following description and appended claims, taken in conjunction with the accompanying drawings.

### BRIEF DESCRIPTION OF THE DRAWINGS

Figure 1 is a plan view of a detection and analysis system for detecting constituents in a sample of a chemical or biological material confined in a sample chamber, where the system includes a cold device for providing a cold background, according to an embodiment of the present invention;

Figure 2 is a plan view of a detection and analysis system for detecting constituents in a sample of a chemical or biological material by aerosolizing the sample in a sample chamber, where the system includes a cold device for providing a cold background, according to another embodiment of the present invention;

Figure 3 is a plan view of a detection and analysis system for standoff detecting vapor and aerosols of chemical or biological materials in the air, where the system includes a cold device for providing a cold background, according to another embodiment of the present invention;

Figure 4 is a plan view of a detection and analysis system for detecting fine powders and liquids of chemical and biological materials on a transmission window, where the system includes a cold device for providing a cold background, according to another embodiment of the present invention;

Figure 5 is a graph with intensity on the vertical axis and wavelength on the horizontal axis showing the emission spectrum for an ambient background and a cold background;

Figure 6 is a graph with radiance on the vertical axis and wavelength on the horizontal axis showing the emission spectrum for theoretical blackbody radiation emissions from a 23°C ambient background, a thermal electric cooler at 133 K and liquid nitrogen at 77 K;

Figure 7 is a graph with intensity on the vertical axis and wavelength on a horizontal axis showing the emission spectrum of SF₆ at 0.015 Torr and the background emission spectrum;

Figure 8 is a graph with percent of emissions or absorption on the vertical axis and pressure on the horizontal axis showing a comparison of emission and absorption measurements as functions of SF₆ vapor pressure at 10.58 µm;

Figure 9 is a graph with percent of emissions above background on the vertical axis and wavelength on the horizontal axis showing the emission spectrum of SF₆ in SF₆/N₂ mixtures with a liquid-nitrogen cold background for several quantities of SF₆ at a pressure of 700 Torr;

Figure 10 is a graph with percent of emissions above background on the vertical axis and wavelength on the horizontal axis showing the emission spectrum of dimethyl-methylphosphonate (DMMP) with a liquid nitrogen background at several pressures;

Figure 11 is a graph with percent of emissions or absorption on the vertical axis and DMMP vapor pressure on the horizontal axis showing a comparison of emission and absorption measurements as functions of DMMP vapor pressure at 9.512 µm;

Figure 12 is a graph with radiance on the vertical axis and wavelength on the horizontal axis showing the emission spectrum of several fine powders;

Figure 13 is a graph with radiance relative to soot on the vertical axis and wavelength on the horizontal axis showing the emission spectrum of several fine powders ratioed to soot;

Figure 14 is a graph with radiance on the vertical axis and wave number on the horizontal axis showing the emission spectrum of a fine powder of fluorescein;

Figure 15 is a graph with the radiance on the vertical axis and wavelength on the horizontal axis showing the emission spectrum of a BG aerosol and BG collected on a window;

Figure 16 is a graph with radiance on the vertical axis and wavelength on the horizontal axis showing the emission spectrums of liquid DMMP and liquid methyl salicylate;

Figure 17 is a graph with radiance on the vertical axis and wavelength on the horizontal axis showing the emission spectrum of liquid aerosols of tributal phosphate and silicone oil; and

Figure 18 is a plan view of a detection and analysis system for detecting chemical or biological material constituents in a cloud, where system includes a laser source to heat a background target.

### DETAILED DESCRIPTION OF THE INVENTION

The following discussion of the invention directed to a system for detecting constituents of a sample against a cold background or a heated background is merely exemplary in nature, and is in no way intended to limit the invention or its application or uses.

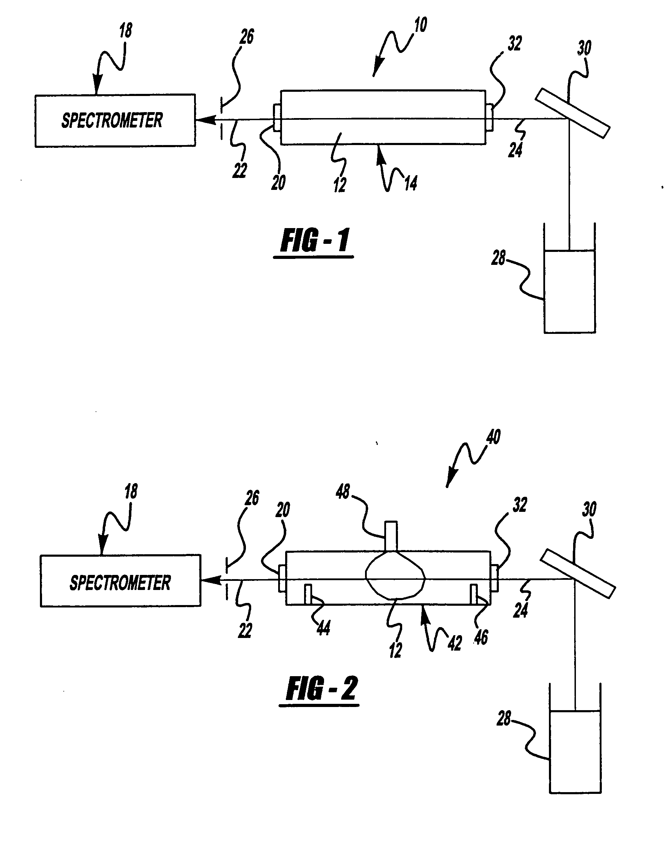

Figure 1 is plan view of a detection and analysis system 10 for detecting the constituents in a sample 12 confined within a sample chamber 14. As will be discussed herein, the sample 12 can be of chemical and biological materials in the form of vapor or aerosol. The system 10 detects and analyzes the chemical vapors, liquid aerosols or biological aerosols in the air by sampling and following the air through the sample chamber 14. In one embodiment, the chamber 14 is a glass chamber, but can be any chamber suitable for the purposes discussed herein. A spectrometer 18 is positioned relative to the chamber 14 so that passive emissions 22 from the sample 12 emitted through a window 20 in the chamber 14 are received by the spectrometer 18. In one embodiment, the emissions 22 are infrared emissions in the range of 5-25 µm. As discussed above, the spectrometer 18 separates the emissions 22 into its constituent wavelengths in a spectral display to identify the fingerprint of particular constituents therein.

The spectrometer 18 can be any spectrometer suitable for the purposes discussed herein. For example, the spectrometer 18 can be an FTIR spectrometer, a grating tuned spectrometer, an opto-acoustic spectrometer, a circular variable filter spectrometer, a linear variable spectrometer, a MEMS spectrometer, etc. Alternatively, a spectral imager can be used instead of the spectrometer 18 to resolve not only the emission spectrum of the emissions 22, but also the spatial distribution of the emissions 22 to aid in resolving the emissions 22 from a background scene.

The field-of-view 24 of the spectrometer 18 is confined by an aperture 26. According to the invention, a cold device, here a liquid-nitrogen dewar 28, is placed in the field-of-view 24 of the spectrometer 18 at an opposite side of the chamber 14 from the spectrometer 18, as shown. Liquid-nitrogen dewars typically have a temperature of about 77K. The cold device can be any cold device suitable for the purposes described herein, such as liquid nitrogen, an electrically powered cooler, such as a thermal electric cooler, a cryogenic cooler, etc. A mirror 30 is used to direct the field-of-view 24 of the spectrometer 18 downward into the dewar 28, as shown.

A window 32 is provided on an opposite side of the chamber 14 from the window 20 to allow the dewar 28 to be in the background of the field-of-view of the spectrometer 18. The windows 20 and 32 should have a high transmission and low reflectance for the passive emissions in the wavelength range of interest, for example, 5-25 µm. This is desirable so that passive emissions from the windows 20 and 32 themselves do not adversely affect the spectral display of the sample 12. Further, the windows 20 and 32 should be made of a material that has a low scattering of ambient light. Examples of suitable windows include polished salt windows, such as potassium bromide, potassium iodine or sodium chloride, anti-reflective (AR) coated zinc selenide (ZnSe) windows, etc. For some samples, the windows 20 and 32 can be removed, where the ends of the chamber 14 are open so that passive emissions from the windows 20 and 32 do not affect the measurements.

The cold background target in the field-of-view 24 of the spectrometer 18 provides the temperature differential between the background and the sample 12 that increases the emissions 22 from the sample 12 in the manner as discussed above. Further, there is a low or near absence of emissions from the cold background. Therefore, instead of heating the sample as was done in the '701 patent, one embodiment of the present invention proposes cooling the background relative to the temperature of the sample 12 to achieve the same type of effect.

Measurement procedures are employed for the system 10. Particularly, a background emission spectrum without the sample 12 in the chamber 14 is measured by the spectrometer 18. A sample emission spectrum is then measured by the system 10 with the sample 12 in the chamber 14. An emission spectrum is then obtained by subtracting the sample spectrum from the background spectrum. The emission spectrum can further be calibrated into an absolute concentration unit by the radiation output from a blackbody source at a known temperature. Measurement times of the constituents in the sample 12, according to the invention, are on the order of 20 ms to about 1 minute.

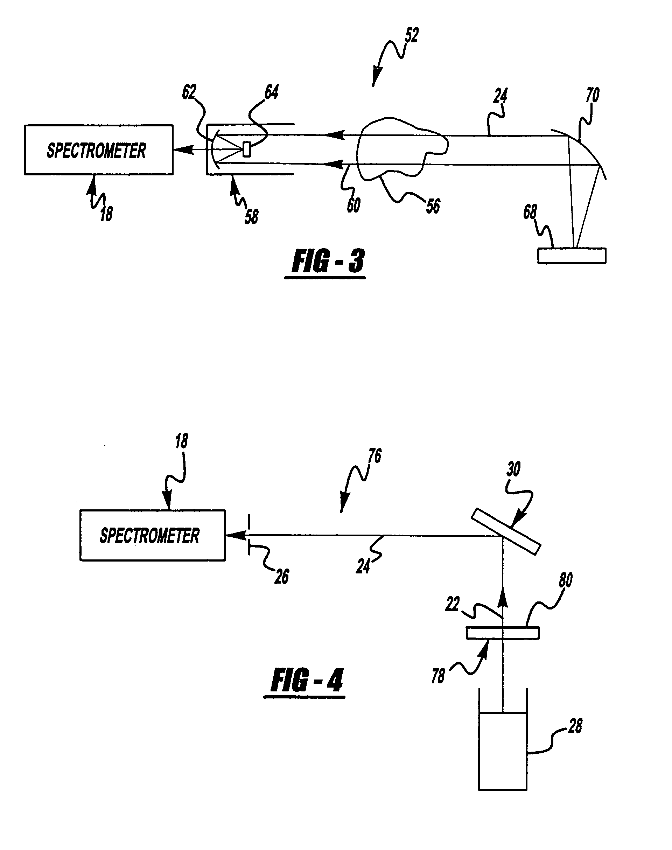

Figure 2 is a plan view of a detection and analysis system 40, according to another embodiment of the present invention, similar to the system 10, where like elements are identified by the same reference numeral. In this embodiment, the chamber 14 is a sample chamber 42 that includes fans 44 and 46 to agitate the sample 12. This embodiment has particular application for detecting the constituents of a powder sample by aerosolizing the powder sample. In one embodiment, a fine powder, such as Bacillus Globigii (BG) spores, Cab-O-Sil (SiO₂), etc., is the sample 12 placed in the chamber 42. The fans 44 and 46 blow the fine powder into an aerosol that circulates inside the chamber 42. Alternatively, a nebulizer 48 can be used to generate liquid aerosols from liquid samples within the chamber 42.

Figure 3 is a plan view of a detection and analysis system 52 similar to the systems 10 and 40 above, where like elements are represented by the same reference number, according to another embodiment of the invention. In this embodiment, the system 52 is detecting a chemical or biological containing cloud 56 in the air remotely from the spectrometer 18. The sample cloud 56 can be any chemical vapor, air-borne powder, chemical aerosols or bio-aerosols, etc. that may be present in the air. A telescope 58 collects emissions 60 from the cloud 56, and focuses the emissions 60 onto an entrance aperture of the spectrometer 18. In this embodiment, the telescope 58 is a cassegrain type telescope including a parabolic mirror 62 and a center reflector 64. However, other types of telescopes, such as Newtonian telescopes, can also be used.

The telescope 58 also acts as a collimator to focus and direct the field-of-view 24 of the spectrometer 18 relative to a cold device 68. As above, the cold device 68 can be any cold device suitable for a particular application. A parabolic mirror 70, or other suitable collimator, is employed to focus the field-of-view 24 of the spectrometer 18 onto the cold device 68. The mirror 70 allows a relatively wide field-of-view 24 of the spectrometer 18 to be focused onto a relatively small surface. Thus, the distance between the spectrometer 18 and the cold device 68 can be relatively long to provide standoff detection of the sample cloud 56.

Figure 4 is a plan view of a detection and analysis system 76 similar to the system 10, where like elements are represented by the same reference number, according to another embodiment of the present invention. In this embodiment, the chamber 14 has been replaced with a transmission sample window 78. The transmission window 78 can be made of any suitable transmissive material that has a low reflection characteristic, such as a ZnSe window with an anti-reflecting (AR) coating, that would provide maximum transmission in the wavelength range of 5-25 µm. A sample 80 is placed on a top surface of the sample window 78. The sample 80 can be a fine powder or a liquid sample. As above, the mirror 30 is used to direct the field-of-view of the spectrometer 18 into the dewar 28. In an alternate embodiment, the mirror 30 can be replaced with a focusing mirror, such as a parabolic mirror, so that a wide field-of-view can be focused onto a small cold surface.

If the sample 80 is a liquid sample, a thin layer of the liquid is placed on the window 78 so that light is able to be transmitted therethrough. The sample 80 does not need to be additionally prepared. In one embodiment, the thickness of the liquid sample, or the diameter of liquid sample droplets, should be smaller than the absorption length of the sample.

If a powder sample is not in the form of a fine powder, the sample is ground into a fine powder before it is placed on the sample window 78. The size of the particles in the powder should be less than the wavelengths of interest, and/or less than the absorption length of the particles, such as less than about 5 µm. Because the cold background provides a significant temperature differential between the sample 12 and the background, the light scattering caused by the powder sample does not significantly affect the ability of the system 76 to detect the constituent of interest. Therefore, the powder sample does not need to be mixed with other materials to get a suitable measurement. Thus, the preparation time of the sample 12 can be significantly reduced over those times currently required in the art.

It is believed that the cold background emission technique of the invention provides the first ever that allows the observation of the infrared emission spectrum of biological aerosols, liquid aerosols, and fine powders of biological, organic, and inorganic materials. High sensitivity levels in the ppb (parts per billion) levels for chemical vapors and less than 1,000 particles of biological aerosols per liter of air can be achieved by the emission technique of the invention.

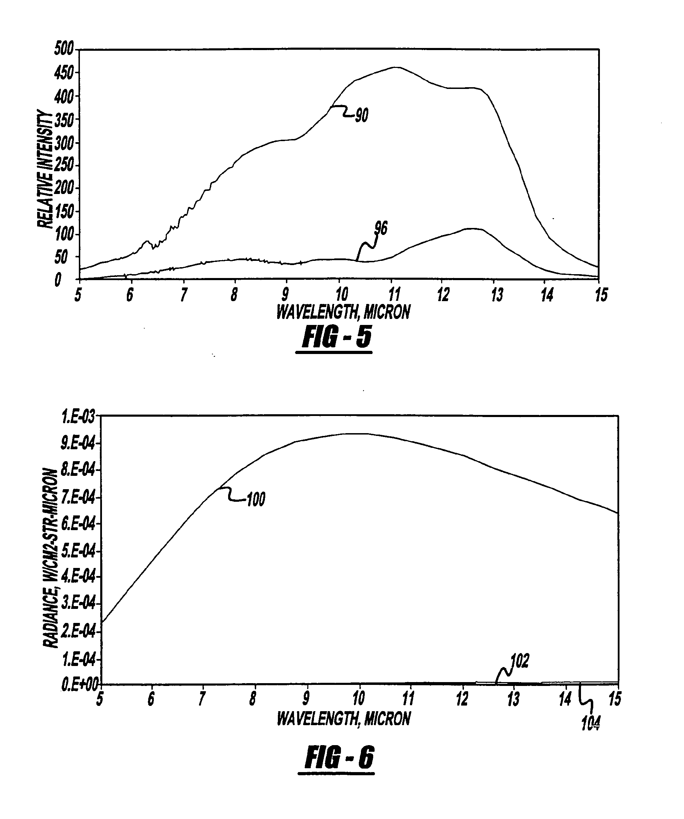

Figure 5 is a graph with relative intensity on the vertical axis and wavelength on the horizontal axis showing a comparison of ambient background emissions with and without a cold background target. Particularly, graph line 90 shows the ambient background emissions without a cold background target. Graph line 96 shows the emissions with a cold background.

Figure 6 is a graph with radiance on the vertical axis and wavelength on the horizontal axis where graph line 100 shows the theoretical black body radiation calculated by the Planck function for an ambient temperature of about 23°C. Graph line 102 shows the emissions calculated by a Planck function for a cold background of 133 K provided by a thermal electrical cooler. Graph line 104 shows the theoretical background emissions calculated by a Planck function for a cold background of 77 K provided by liquid nitrogen.

In theory, the emissions for a surface cooled by liquid-nitrogen should be negligible, as shown in figure 6. However, the background emissions with cold background targets are relatively high, as shown in figure 5. It is speculated that the self emissions or reflections of the optical components in the spectrometer 18 may be responsible for the non-negligible background emissions when using a liquid-nitrogen dewar. It is predicted that minimizing the reflection and self emissions of the optical components in the spectrometer 18 will lead to further reducing the background emissions and thereby improve the detection sensitivity. The thermal electric cooler appears to yield sufficiently low background emissions in the spectral range of interest.

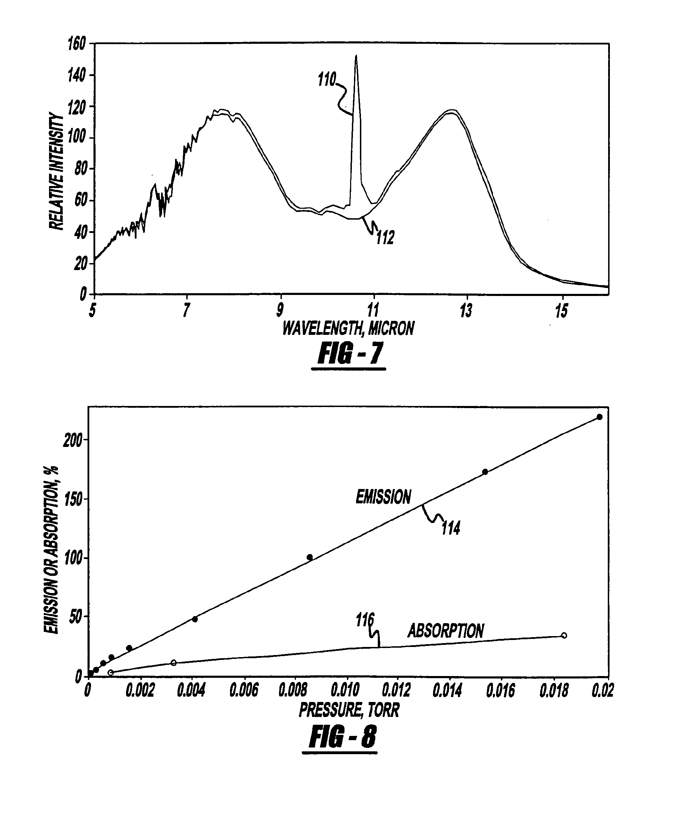

Figure 7 is a graph with relative intensity on the vertical axis and wavelength on the horizontal axis showing the emission spectrum of an SF₆ sample, graph line 110, using the system 10. The emission band at 10.58 µm is clearly resolved compared to a background emission spectrum, graph line 112.

Figure 8 is a graph with percent emission or absorption on the vertical axis and pressure on the horizontal axis showing the peak emission intensity of SF₆, normalized to the background emission spectrum, as functions of pressure. The near linearity between the emission intensity, graph line 114, and SF₆ pressure illustrates the utility of the emission method of the invention for quantification analysis. Graph line 116 shows the absorption of SF₆ for comparison. The absorption data is measured by using a hot source at 500°C. The comparison clearly indicates that the emission method of the invention is much more sensitive than a conventional absorption method. The minimum detectable level of the emission method is found to be about 50 times lower than that of an absorption method using a near identical configuration, i.e. the same pathlength.

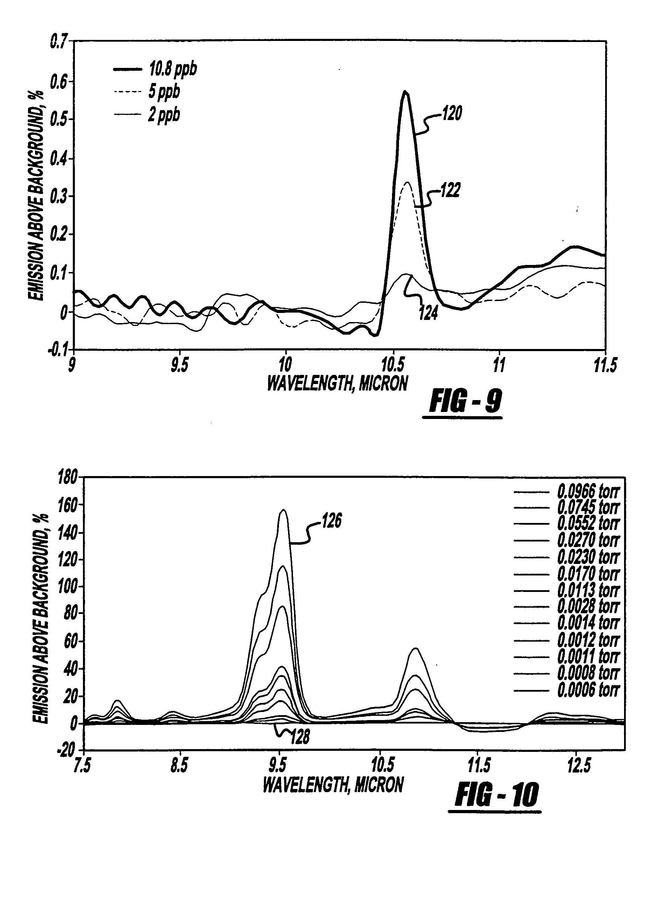

Figure 9 is a graph with percent emission above background on the vertical axis and wavelength on the horizontal axis illustrating the emission spectrum of SF₆ in SF₆/N₂ mixture samples with liquid-nitrogen as a cold background and a pressure of 700 Torr. Graph line 120 represents 10.8 ppb of SF₆ in the mixture, graph line 122 represents 5 ppb of SF₆ in the mixture and graph line 124 represents 2 ppb of SF₆ in the mixture. For this experiment, the path length of the chamber 14 was about 50 cm, and the signal-to-noise ratio was about 1-2 at the 2 ppb level. Hence, the limit in the minimum detectable density is estimated to be about 1 ppb under the current configuration.

In one configuration of the invention, the FTIR spectrometer has a relatively small cross section viewing area of about 0.25 cm, with a pathlength of about 50 cm. The emission method can be more sensitive than that determined here by simply increasing the detection volume, for example, through use of a relatively large telescope over an extended sample, as shown in Figure 3. On other hand, the sensitivity of an absorption technique can be improved only by increasing the pathlength. Hence, the emission method can be much more sensitive than an absorption method, and its minimum detectable density can reach much below the ppb level, as reported here.

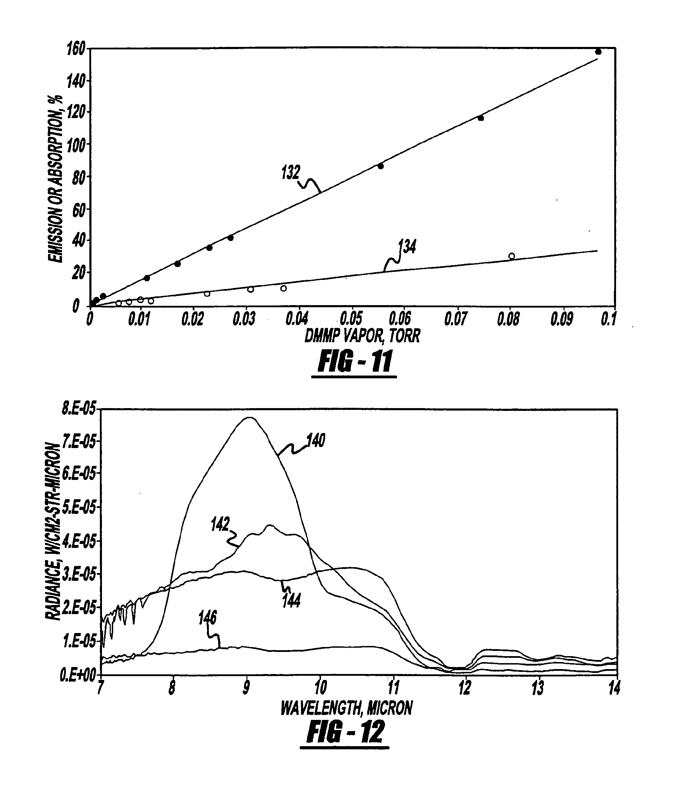

Figure 10 is a graph with percent emissions above background on the vertical axis and wavelength on the horizontal axis showing the emission spectrum of DMMP with a liquid-nitrogen background at several pressures measured using the system 10. DMMP is often used as a stimulant for chemical agents, since its physical properties and absorption spectrum closely resemble that of phosphonate-based chemical agents, including GA, GB, GD and VX. A top graph line 126 represents the emission spectrum at 0.0996 Torr and a bottom graph line 128 shows the emission spectrum at 0.0006 Torr with other emission spectrums at pressures therebetween.

Figure 11 is a graph with percent emissions and absorption on the vertical axis and DMMP vapor pressure on the horizontal axis showing a comparison of emission and absorption measurements as a function of DMMP vapor pressure at 9.512 µm. Graph line 132 represents the emission spectrum, and illustrates a near linear relation between the emission peak at 9.512 µm with the DMMP pressure. Graph line 134 represents the absorption spectrum using a hot source at 500°C. The comparison illustrates that the emission method of the invention is much more sensitive than the absorption method of the prior art. These results illustrate that the invention can be used to detect chemical agents in the air at extremely low levels, even below the threshold of toxicity.

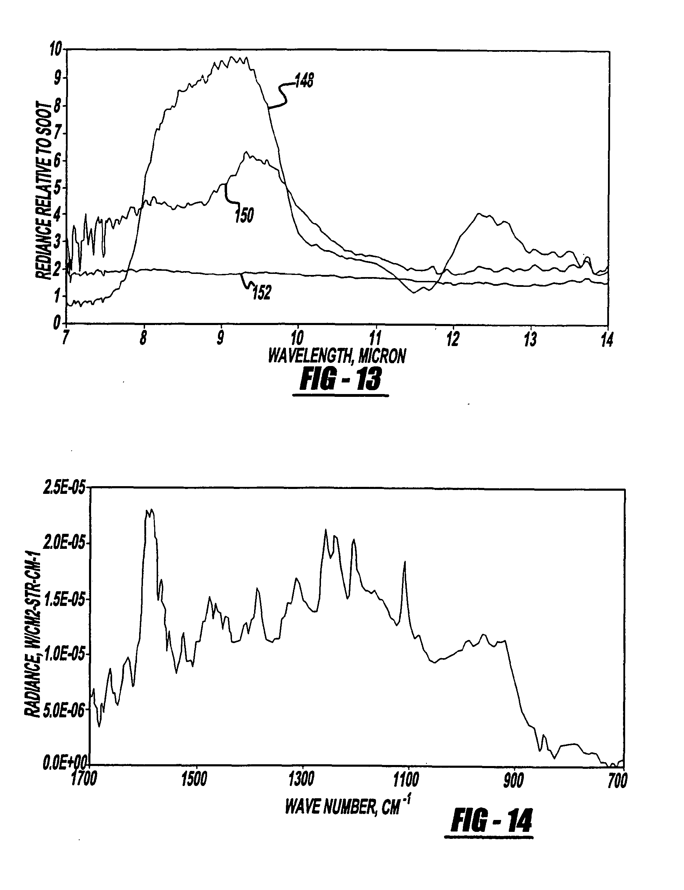

Figure 12 is a graph with radiance on the vertical axis and wavelength on the horizontal axis showing the emission spectrum of several fine powder samples measured by the system 76. Particularly, graph line 142 represents the emission spectrum of BG spores, graph line 140 represents the emissions spectrum of Cab-O-Sil, graph line 144 represents the emission spectrum of ovalbumin and graph line 146 represents the emission spectrum of soot. Cab-O-Sil is a trade name for fine powders of SiO₂, which is usually produced by the combustion of SiH₄ and oxygen. BG spores are often used as stimulants for biological agents. BG spores, Cab-O-Sil and soot can be analyzed in their normal configuration, however, ovalbumin samples need to be ground down. The averaged particle sizes are measured to be about 1.5, 3.8, 0.78 and 8.6 µm for BG spores, Cab-O-Sil, soot and ovalbumin, respectively. The emission spectrums have been calibrated into an absolute radiance unit using a blackbody source.

The emission spectrum of soot should exhibit a profile resembling a blackbody curve at ambient temperature. However, the soot emission spectrum shown in figure 12 deviates from that of a blackbody. The deviations are probably a result of the spectral response of the spectrometer 18.

In order to remove this variation caused by the spectrometer 18, the emission spectrum of these fine powders is ratioed to soot. Figure 13 is a graph with radiance relative to soot on the vertical axis and wavelength on the horizontal axis showing the emission spectrum of these fine powders ratioed to soot. Particularly, graph line 150 is the radiance relative to soot emission spectrum for BG spores, graph line 148 is the radiance relative to soot emission spectrum for Cab-O-Sil and graph line 152 is the radiance relative to soot emission spectrum for ovalbumin.

The ratioed emission spectrums of Cab-O-Sil and BG spores agree with their known absorption spectra. This favorable comparison suggests that the emission method of the invention can be used to measure the characteristic IR emissions of fine powders. The emission spectrum of ovalbumin, on the other hand, exhibits a spectrum closely resembling that of soot. It is speculated that the particle size may play a role. The average particle size for ovalbumin was found to be about 8.6 µm as compared to 1.5 and 3.8 µm for BG spores and Cab-O-Sil, respectively. As the particle size becomes large compared to the absorption length of the particle, the emissions may exhibit a blackbody like emission spectrum. Further experiments with ovalbumin with a smaller particle size may show a clearer fingerprint spectrum.

Figure 14 is a graph with radiance on the vertical axis and wave number on the horizontal axis showing the emission spectrum of fluorescein measured by the system 76. The emission spectrum of fluorescein exhibits fine molecular vibrational bands. The band positions agree with that of the known absorption spectrum of fluorescein. The particle size of the fluorescein sample was measured to be about 0.8 µm.

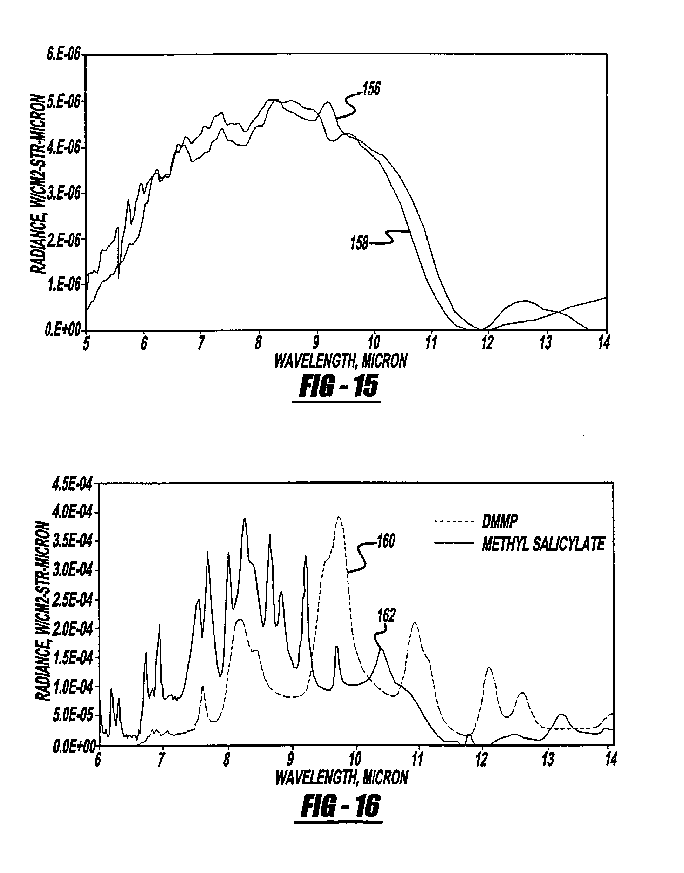

Figure 15 is a graph with radiance on the vertical axis and wavelength on the horizontal axis showing the detected emission spectrum of a BG aerosol in the chamber 42, graph line 156, and BG formed on the windows 20 and 32, graph line 158. Emission measurements of BG aerosols were performed in the presence of the windows 20 and 32 in the chamber 40. The emissions spectrum is found to be a contribution from both the aerosol and the particles collected on the windows 20 and 32. The two contributions can be separated since the contribution from the windows 20 and 32 persist after the fans 44 and 46 were turned off. The emission spectrum shown in figure 15 of the BG aerosol is nearly identical to that of the fine particles that were collected on the windows 20 and 32. This may be a first observation of an emission spectrum from a bacteria aerosol.

Figure 16 is a graph with radiance on the vertical axis and wavelength on the horizontal axis showing the emission spectrum for liquid DMMP, graph line 160, and liquid methyl salicylate, graph line 162, using the system 76. The methyl salicylate and DMMP were sparsely spread over the window 78 as a liquid sample 80. Typically, such sparsely spread liquids cannot be readily measured by the known absorption methods because of the leakage of light through the sample 80. However, the emission technique of the invention is able to provide the emission spectrum with light leaking through the sample 80 and without extensive sample preparation.

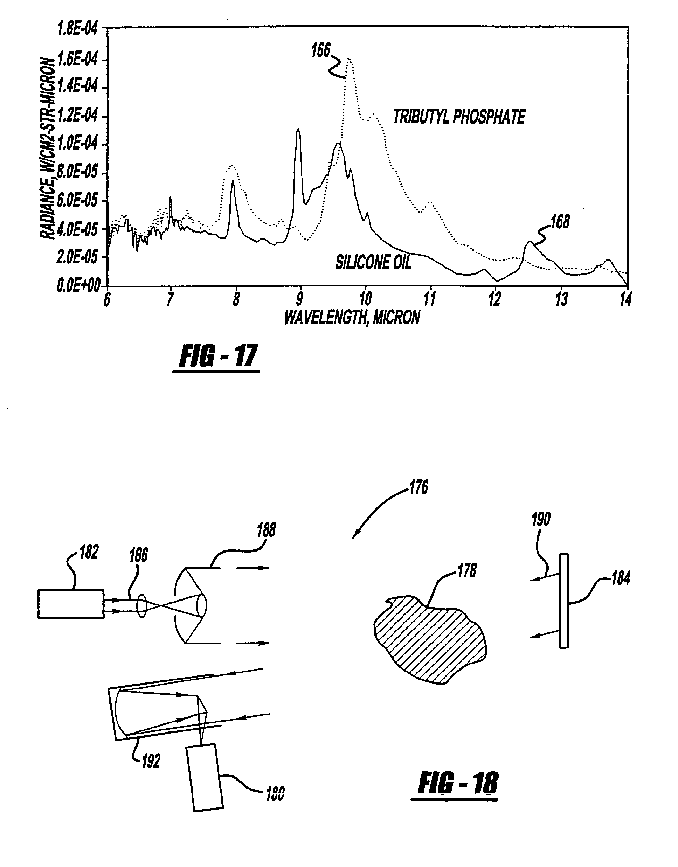

Figure 17 is a graph with radiance on the vertical axis and wavelength on the horizontal axis showing the emission spectrum of liquid aerosols of tributyl phosphate, graph line 166, and silicon oil, graph line 168, using the system 40. The samples where nebulized by the nebulizer 48. Liquids having very little vapor pressures were selected to avoid any interference by the emissions from the vapor.

Figure 18 is plan view of a detection and analysis system 176 for remotely detecting a chemical or biological containing cloud 178 in the air, according another embodiment of the invention. In this embodiment, an electromagnetic radiation source 182 is employed to remotely irradiate a background target 184, such as a hill, terrain, tree or building, which is behind the cloud 178. The system 176 includes a spectrometer 180, where the cloud 178 and the background target 184 are along the line of sight of the spectrometer 180. The radiation source 182 emits a beam of radiation 186 that is expanded by a beam expanding telescope 188 to be directed towards the background target 184. The radiation 186 heats the background target 184 and causes its temperature to rise relative to the cloud 178. Emissions 190 from the warmer background target 184 will exhibit a fingerprint absorption spectrum of the constituents in the cloud 178 as it passes through the cloud 178.

The spectrometer 180 is positioned relative to the cloud 178 to resolve the absorption spectrum, and thereby identifying the constituents therein. The spectrometer 180 can be any spectrometer suitable for the purposes discussed herein, such as an FTIR spectrometer, a grating tuned spectrometer, an opto-acoustic spectrometer, a circular variable filter spectrometer, a linear variable spectrometer, a MEMS spectrometer, etc. Alternatively, a spectral imager can be used instead of the spectrometer 180 to resolve not only the spectrum of the emissions, but also the spatial distribution of the emissions to aid in resolving the emission from a background scene. A receiving telescope 192 receives the emissions 190 from the background target 184 through the cloud 178, and focus the emissions 190 onto the spectrometer 180. Therefore, instead of using a prepared cold background as discussed above or heating the sample as was done in '701 patent, this embodiment of the invention proposes heating the background target 184 remotely relative to the temperature of the cloud 178 to achieve the same type of effect.

The source 182 can be a microwave source or a laser beam source, such as a CO₂ laser, HF laser, DF laser, solid-state laser or fiber laser. The '701 patent discloses that the wavelength of the radiation is to be in resonance with a chemical constituent of the cloud or the atmosphere molecules. For this embodiment of the invention, there is no restriction on the selection of the wavelength for the electromagnetic radiation 186, since any wavelength can be effective in heating a background target. However the electromagnetic radiation 186 should have sufficient power, preferable in the range of several tens of watts to tens of kilowatts in order to raise the temperature of the background target 184 sufficiently with respect to the cloud 178.

The foregoing discussion discloses and describes merely exemplary embodiments of the present invention. One skilled in the art will readily recognize from such discussion and from the accompanying drawings and claims that various changes, modifications and variations can be made therein without departing from the spirit and scope of the invention as defined in the following claims.

## Claims

1. A system for detecting and analyzing chemical and biological constituents in a sample, said system comprising:
a spectrometer responsive to emissions from the sample, said spectrometer having a field-of-view and generating an emission spectrum of constituents in the sample in the field-of-view; and
a cold device positioned in the field-of-view of the spectrometer, said cold device providing a cold background relative to the temperature of the sample.

2. The system according to claim 1 wherein the cold device is selected from the group consisting of an electrically powered cooler, including a thermoelectric cooler and a cryogenic cooler, and a cold dewar, including a liquid-nitrogen dewar.

3. The system according to claim 1 wherein the spectrometer is selected from the group consisting of Fourier transform infrared spectrometers, grating tuned spectrometers, opto-acoustic spectrometers, circular variable filter spectrometers, linear variable spectrometers, MEMS spectrometer, and spectral imagers.

4. The system according to claim 1 further comprising a transmission window, said sample being deposited on the transmission window.

5. The system according to claim 1 further comprising a sample chamber, said sample being confined within the chamber.

6. The system according to claim 5 wherein the sample chamber includes fans for agitating the sample in the form of fine powders into particulate aerosol within the chamber.

7. The system according to claim 5 wherein the sample chamber includes a nebulizer for nebulizing the sample in the form of liquid into a liquid aerosol within the chamber.

8. The system according to claim 1 wherein the sample is selected from the group consisting of a liquid sample, a powder sample, a liquid aerosol sample, a particulate aerosol sample, a bio-aerosol sample, a vapor sample, a gas sample, chemical agents, biological agents, industrial chemicals, toxins, drugs, fungi, pollens, and explosives in the form of vapor, powder, liquid or aerosol.

9. The system according to claim 1 further comprising a telescope for collimating the field-of-view of the spectrometer.

10. The system according to claim 1 further comprising focusing optics for focusing the field-of-view of the spectrometer onto the cold device.
